# EUROPÄISCHE PATENTSCHRIFT

(11) **EP 0 537 569 B1**
(45) Veröffentlichungstag und Bekanntmachung des Hinweises auf die Patenterteilung: **06.03.1996**
(21) Anmeldenummer: 92116874.6
(22) Anmeldetag: 02.10.1992
(51) Int. Cl.: B60Q 1/068

(54) **Scheinwerfer für Fahrzeuge**
Headlamp for vehicle
Phare pour véhicule

(30) Priorität: 12.10.1991 DE 4133795
(43) Veröffentlichungstag der Anmeldung: 21.04.1993
(73) Patentinhaber: Hella KG Hueck & Co., D-59552 Lippstadt (DE)
(72) Erfinder: Schäfers, Franz, W-4790 Paderborn (DE); Schneeberg, Karl, W-4780 Lippstadt-Garfeln (DE)

(56) Entgegenhaltungen:
- FR-A- 2 479 112
- FR-A- 2 543 894
- FR-A- 2 664 963

## Beschreibung

Die Erfindung bezieht sich auf einen Scheinwerfer für Fahrzeuge, mit den Merkmalen nach dem Oberbegriff des Anspruchs 1.

Bei einem aus der DE-A 39 29 878 bekannten Scheinwerfer ist es durch die manuelle Einstellvorrichtung möglich, ohne Verstellvorrichtungen für die Feineinstellung des Reflektors verstellen zu müssen, den Reflektor um eine horizontale Achse in zwei ortsfeste Stellungen zu verstellen. Ein Verstellen des Reflektors aus seiner Normalstellung zum Fahrzeug ist dann zweckmäßig, wenn wegen einer Beladung des Fahrzeugs die aus dem Scheinwerfer austretenden Lichtbündel so hoch stehen, daß sie den Gegenverkehr blenden. Nach dem Verstellen des Reflektors in die andere Stellung verlaufen die aus dem Scheinwerfer austretenden Lichtbündel zur Fahrbahn hin stärker geneigt. Bei der bekannten Einstellungsvorrichtung ist die schräg verlaufende Gleitfläche und der in die Gleitfläche eingreifende Vorsprung von einem in die Innenseite der Hülse eingebrachten Innengewinde und einem in das Innengewinde eingreifenden Außengewinde gebildet, mit welchem die Mantelfläche des den Griffteil tragenden Endabschnitts des bolzenartigen Verstellelements versehen ist. Um das Innengewinde der Hülse des Gehäuseteils entformen zu können, muß der das Innengewinde formende verstellbare Werkzeugteil verdrehbar sein. Dadurch ergibt sich eine wesentlich längere Zykluszeit für das die Hülse formende Werkzeug. Außerdem müssen die Maße für das Innengewinde und das Außengewinde sehr genau aufeinander abgestimmt sein, da sonst entweder zwischen dem bolzenartigen Verstellelement und der Hülse zu großes Spiel bestehen kann oder das Verstellelement nur sehr schwergängig verdrehbar ist. Außerdem vergrößert das an einem Endabschnitt des Verstellelements angeformte Griffteil bei einer ausreichenden Grifffläche die Baulänge des bolzenartigen Verstellelements.

Aus der FR-A-2 479 112 ist ein Scheinwerfer für Fahrzeuge bekanntgeworden, bei welchem das bolzenartige Verstellelement unmittelbar an dem Boden des topfförmigen Griffteils angeformt ist und aus dem fopfförmigen Griffteil herausragt. Bei einem Aufsetzen des Griffteils auf eine an das Gehäuse angebrachte Hülse wird das bolzenartige Verstellelement in die Hülse eingesteckt. Eine klapperfreie radiale Halterung des Griffteils bzw. des bolzenartigen Verstellelements an der Hülse kann nur durch ein sehr kleines Spiel zwischen dem bolzenartigen Verstellelement und der Durchgangsöffnung der Hülse erreicht werden. Die Gleitfläche wird von einem in die Mantelfläche der Hülse eingebrachten Längsschlitz gebildet, während der Vorsprung an die Innenseite des topfförmigen Griffteils angeformt ist und in den Längsschlitz eingreift.

FR-A-2 479 112 zeigt weiter, daß der Längsschlitz in der Hülse angebracht ist und einen zum freien Rand der Hülse sich hin erstreckenden Endabschnitt aufweist, welcher am freien Rand offen ausgeführt ist und etwa parallel zu Längsachse des bolzenartigen Verstellelementes verläuft, wobei einer Nocken an dem topfförmigen Griffteil angebracht ist. Dieses Dokument bildet den Oberbegriff des Anspruchs 1.

Aufgabe der Erfindung ist es, den im Oberbegriff des Anspruchs 1 beschriebenen Scheinwerfer derart zu gestalten, daß der Längsschlitz und der in den Längsschlitz eingreifende Vorsprung einfach und leicht entformbar sind und bei einer klapperfreien Halterung des Griffteils und des bolzenartigen Verstellelementes an der Hülse sowohl das Griffteil leichtgängig und ruckfrei verdrehbar ist als auch die Durchgangsöffnung der Hülse, ohne zusätzliche Teile verwenden zu müssen, abgedichtet ist.

Diese Aufgabe wird nach der Erfindung durch Merkmale des Anspruchs 1 gelöst.

Die Rippe kann einfach und leicht entformt werden, da sie an der Außenseite der Hülse angebracht ist. Das bolzenartige Verstellelement ist durch den in den Längsschlitz eingreifenden Nocken axial und durch die an der Innenseite des topfförmigen Griffteils anliegende Rippe der Mantelfläche der Hülse radial gehalten. In diesem Zusammenhang ist es weiterhin vorteilhaft, wenn zwischen dem durch die Hülse hindurchgehenden Endabschnitt des bolzenartigen Verstellelements und der Innenseite der Hülse Spiel besteht. Dadurch ist es möglich, das bolzenartige Verstellelement leicht und einfach in die von der Hülse gebildete Gehäuseöffnung einzuführen und den an die Mantelfläche der Hülse angebrachten Nocken in den Längsschlitz des topfförmigen Griffteils einzufädeln. Außerdem sind zur Herstellung der Innenseite der Hülse und der ihr gegenüberliegenden Mantelfläche des bolzenartigen Verstellelements keine engen Toleranzen notwendig.

Bei einer besonders vorteilhaften Weiterbildung der Erfindung liegt die Mantelfläche der Hülse an der zylinderförmigen Innenseite des Topfes mit einem leicht verformbaren Abschnitt unter Vorspannung an. Dadurch können die Toleranzen zur Herstellung der Mantelfläche der Hülse und der zylindrischen Innenseite des topfförmigen Griffteils groß gewählt sein, und trotzdem ist die radiale spielfreie Halterung des topfförmigen Griffteils sicher. Solche elastisch nachgiebigen Abschnitte sind besonders dann vorteilhaft, wenn der topfförmige Griffteil, um ihn besser entformen zu können, mit seiner zylinderförmigen Innenseite zum Boden hin leicht konisch verläuft. In diesem Zusammenhang ist es weiterhin vorteilhaft, wenn der elastisch nachgiebige Abschnitt von einer an die Mantelfläche der Hülse angeformten umlaufenden Rippe gebildet ist, welche sich in radialer Richtung nach außen verjüngt. Hierbei liegt die Mantelfläche der Hülse nur mit einem linienartigen Abschnitt an der Innenseite der topfförmigen Hülse an. Dadurch ist bei radialer spielfreier Arretierung des Griffteils an der Hülse immer ein leichtes und ruckfreies Verdrehen des Griffteils möglich.

Vorteilhaft ist es weiterhin, wenn eine Rippe zwischen dem Nocken und dem freien Ende der Hülse verläuft. Dadurch ist der topfförmige Griffteil absolut dicht auf die Hülse aufgesetzt.

Ein weiterer Vorteil ist es, wenn an die Mantelfläche der Hülse mehrere, einen Abstand zueinander aufweisende Rippen angeformt sind, wobei der in den Längsschlitz eingreifende Nocken zwischen zwei Rippen angeordnet sein kann. Dadurch ist sowohl ein klapperfreier Festsitz des bolzenartigen Verstellelements an der Hülse sicher als auch die Arretierung des bolzenartigen Verstellelements verhindert, daß der den Reflektor tragende Endabschnitt des bolzenartigen Verstellelements nicht seitlich wegschwenken kann.

Von Vorteil ist es weiterhin, wenn der Nocken der Hülse spielfrei in den die Gleitfläche bildenden Abschnitt des Längsschlitzes eingreift. Dadurch ist das bolzenartige Verstellelement axial spielfrei in der Hülse gehalten, ohne zusätzliche Teile verwenden zu müssen. Ein solches zusätzliches Teil ist z. B. ein federndes Element, welches unter Vorspannung zwischen dem Reflektor und der Innenseite des Gehäuses eingesetzt ist und den Nocken gegen die zur Scheinwerferrückseite hinweisende schmale Seitenfläche des Längsschlitzes drückt. In diesem Zusammenhang ist es weiterhin vorteilhaft, wenn der Nocken an die Hülse angeformt ist. Eine solche Lösung ist einfach und sehr kostengünstig herstellbar.

Ebenfalls ist es vorteilhaft, wenn die Hohe des topfförmigen Griffteils etwa der Länge der Hülse entspricht. Bei einer solchen Lösung baut die Einstellungsvorrichtung in ihrer Länge so klein wie möglich.

In den Patentansprüchen 7 bis 12 sind weitere zweckmäßige Ausführungsformen von Einzelheiten des Scheinwerfers gemäß der Erfindung erläutert.

Weitere vorteilhafte Weiterbildungen des Scheinwerfers sind in den Unteransprüchen dargelegt.

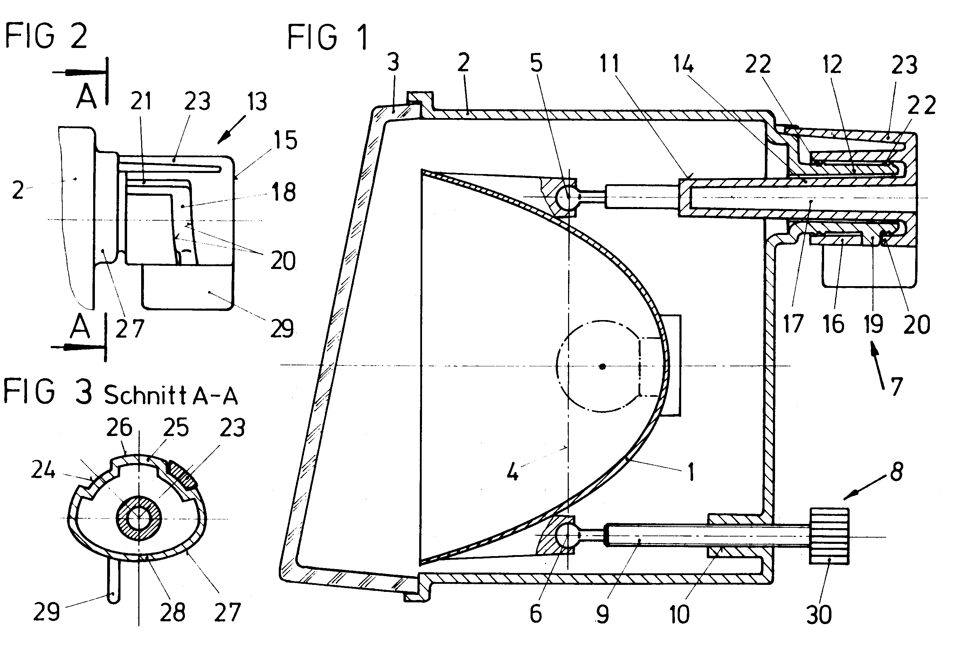

Ein Ausführungsbeispiel ist in der Zeichnung dargestellt, und zwar zeigt
- Figur 1: einen vertikalen Längsschnitt durch einen Scheinwerfer für Fahrzeuge mit einer Einstellvorrichtung
- Figur 2: in einer Teilansicht angeschnitten den von dem Gehäuse nach außen abstehenden Teil der Einstellvorrichtung und
- Figur 3: einen Schnitt nach der Linie A-A in der Figur 2.

Der schalenförmige Reflektor (1) ist in den von dem schalenförmigen Gehäuse (2) und der mit dem äußeren umlaufenden Rand des Gehäuses verbundenen lichtdurchlässigen Lichtscheibe (3) gebildeten Scheinwerferinnenraum eingesetzt. Der schalenförmige Reflektor (1) ist um die vertikale Schwenkachse (4) und die horizontalen Schwenkachsen (5 und 6) schwenkbar. Der Reflektor (1) ist, ausgehend von dem Schnittpunkt der horizontalen Schwenkachse (5) und der vertikalen Schwenkachse (4) über die Einstellvorrichtung (7) mit dem Gehäuse verbunden, während der Reflektor (1), ausgehend von dem zwischen der vertikalen Schwenkachse (4) und der horizontalen Schwenkachse (6) bestehenden Schnittpunkt über die Verstellvorrichtung (8) mit dem Gehäuse (2) verbunden ist. Der Reflektor (1) ist, ausgehend von der horizontal verlaufenden Schwenkachse (6) über eine weitere, nicht dargestellte, Verstellvorrichtung (8) mit dem Gehäuse verbunden. Durch letztere Verstellvorrichtung ist der schalenförmige Reflektor (1) kontinuierlich um die vertikale Schwenkachse (4) verstellbar, während für das kontinuierliche Verstellen des Reflektors (1) um die horizontale Schwenkachse (5) beide Verstellvorrichtungen (8) gleichmäßig verstellt werden müssen. Die beiden Verstellvorrichtungen (8) bestehen aus der Gewindestange (9), welche mit dem in das Scheinwerferinnere ragende Ende gelenkig mit dem Scheinwerfer (1) verbunden ist und mit dem aus dem Scheinwerfer nach außen ragenden Ende den Griffteil (3) trägt. Die Gewindestange (9) geht durch die Gehäuseöffnung (10) hindurch, welche als Mutter für die Gewindestange (9) dient.

Die Einstellvorrichtung (7) weist das bolzenartige Verstellelement (11) auf, welches durch die von der Hülse (12) gebildeten Gehäuseöffnung hindurchgeht. Das bolzenartige Verstellelement (11) ist mit dem zum Scheinwerferinneren hin ragenden Endabschnitt gelenkig mit der Rückseite des schalenförmigen Reflektors (1) verbunden, während der zur Scheinwerferrückseite weisende Endabschnitt (14) mit Spiel durch die Hülse (12) hindurchgeht und mit dem aus der Hülse (12) herausragenden Ende den topfförmigen Griffteil (13) trägt. Der Endabschnitt (14) ist an der Innenseite des Bodens (15) des topfförmigen Griffteils (13) angeformt und ragt aus dem Topf heraus. Der Endabschnitt (14) ist durch das zur Scheinwerferrückseite hin geöffnete Sackloch (17) hohl ausgeführt. Der topfförmige Griffteil (13) ist deckelartig auf die Hülse (12) aufgesetzt. Hierbei überlappt die zylinderförmige Seitenwandung (16) des topfförmigen Griffteils (13) und fast die gesamte Wandung der Hülse (12). In die zylinderförmige Seitenwandung (16) ist der Längsschlitz (18) eingebracht, in welchen der an die Mantelfläche der Hülse (12) angeformte Nocken (19) spielfrei eingreift. Ein Abschnitt des Längsschlitzes (18) weist die schräg verlaufenden Gleitflächen (20) für den Nocken (19) auf, durch welche der Griffteil (13) bzw. das bolzenartige Verstellelement (11) axial verschiebbar ist. In einem zum freien Rand des topfförmigen Griffteils (13) sich erstreckenden Endabschnitts des Längsschlitzes (18) verlaufen ihre schmalen Seitenflächen (21) etwa parallel zur Längsachse des bolzenartigen Verstellelements (11). An die Mantelfläche der Hülse (12) sind die elastisch nachgiebigen Abschnitte (22) angebracht, welche von umlaufenden und im Querschnitt dreieckigen Rippen gebildet sind. Der Nocken (19) ist zwischen den vier Rippen (22) angeordnet. Durch die Rippen (22) ist die Anlage des topfförmigen Griffteils (13) an der Hülse (12) linienförmig. An das topfförmige Griffteil (13) ist in die Nähe des Bodens (15) der in Aufsetzrichtung des Griffteils (13) weisende federnde Arm (23) an der Mantelfläche der Seitenwandung (16) angeformt. Der federnde Arm (23) überragt mit seinem freien Ende den äußeren Rand des topfförmigen Griffteils (13) und greift in eine der beiden Verrastungsmarken (24) des Gehäuses (2) ein. Die Verrastungsmarken (24) sind in einen nahezu konzentrisch zur Längsachse des bolzenartigen Verstellelements (11) verlaufenden Wandungsabschnitt (25) eingebracht. Die Verrastungsmarken (24) sind durch in die radial nach außen weisende Seitenfläche des Wandungsabschnitts (25) eingebrachte Vertiefungen gebildet. Zwischen den Vertiefungen (24) dient die äußere Seitenfläche des Wandungsabschnitts (25) als Gleitfläche (26) für den federnden Arm (23). Der konzentrisch verlaufende Wandungsabschnitt (25) weist einen größeren Halbmesser als die Hülse (12) auf und ist der Abschnitt eines das bolzenförmige Verstellelement (11) vollständig umgebenden Kragens (27), welcher zu seinem zur Scheinwerferrückseite hinweisenden Ende in die Hülse (12) einstückig übergeht. Der dem die Gleitfläche (26) aufweisenden Wandungsabschnitt (25) gegenüberliegende Wandungsabschnitt 28) des Kragens (27) weist zumindest an einer Stelle einen kleineren Abstand zur Längsachse des bolzenartigen Verstellelements (11) auf als der freie Endabschnitt des federnden Arms (23) im entspannten Zustand. Der Wandungsabschnitt (28) nimmt mit seinem Abstand zur Längsachse des bolzenartigen Verstellelements (11) stetig zu den Verrastungsstellen (24) hin zu.

## Patentansprüche

1. Scheinwerfer für Fahrzeuge, welcher in eine Karosserieöffnung einsetzbar ist, mit folgenden Merkmalen:
- ein schalenförmiger Reflektor (1) ist in den von einem Gehäuse (2) und einer lichtdurchlässigen Lichtscheibe (3) gebildeten Scheinwerferinnenraum eingesetzt,
- eine manuelle Einstellvorrichtung (7), durch welche der Reflektor (1) um eine horizontale Schwenkachse (6) verstellbar ist, weist ein durch eine Gehäuseöffnung hindurchgehendes bolzenartiges Verstellelement (11) auf, welches mit dem aus der Gehäuseöffnung nach außen ragenden Endabschnitt (14) ein angeformtes topfförmiges Griffteil (13) und mit dem in den Scheinwerferinnenraum ragenden Endabschnitt den Reflektor (1) trägt,
- das bolzenartige Verstellelement (11) ist unmittelbar an den Boden (15) des topfförmigen Griffteils (13) angeformt und ragt aus dem topfförmigen Griffteil (13) heraus,
- das bolzenartige Verstellelement (11) ist in der Gehäuseöffnung zwischen zwei Endstellungen (24) verdrehbar und beim Verdrehen durch das Zusammenwirken eines radialen Vorsprungs (19) und einer schräg verlaufenden Gleitfläche (20) in der Gehäuseöffnung axial verschiebbar,
- das bolzenartige Verstellelement (11) ist durch den Eingriff des radialen Vorsprungs (19) in die Gleitfläche (20) axial an der Hülse (12) gehalten,
- die Gleitfläche (20) ist von einem Längsschlitz (18) mit langen schmalen Seitenflächen gebildet, während der an der Gleitfläche (20) anliegende Vorsprung (19) ein in den Längsschlitz (18) eingreifender Nocken ist,
- die Innenfläche der Seitenwandung (16) des topfförmigen Griffteils (13) zylinderförmig ausgeführt ist,
dadurch gekennzeichnet, daß
- der Längsschlitz (18) in die umlaufende Seitenwandung (16) des topfförmigen Griffteils (13) eingebracht ist und einen zum freien Rand des topfförmigen Griffteils (13) sich hin erstreckenden Endabschnitt aufweist, welcher am freien Rand offen ausgeführt ist und etwa prallel zur Längsachse des bolzenartigen Verstellelementes (11) verläuft, wobei der Nocken (19) an die Mantelfläche der Hülse (12) angeformt ist,
- das topfförmige Griffteil (13) mit der zylinderförmigen Innenfläche seiner Seitenwandung (16) spielfrei an der Mantelfläche der Hülse (12) anliegt.
- die Mantelfläche der Hülse (12) an der zylinderförmigen Innenfläche des topfförmigen Griffteils (13) umlaufend mit mindestens einer elastisch oder plastisch nachgiebigen Rippe (22) unter Vorspannung anliegt,
- die Rippe (22) sich nach außen hin verjüngt und zwischen dem Nocken (19) der Hülse (12) und dem freien Ende der Hülse (12) an die Mantelfläche der Hülse (12) angeformt ist.

2. Scheinwerfer nach Anspruch 1, dadurch gekennzeichnet, daß zwischen dem durch die Hülse (12) hindurchgehenden Endabschnitt (14) des bolzenartigen Verstellelements (11) und der Innenseite der Hülse (12) Spiel besteht.

3. Scheinwerfer nach einem der Ansprüche 1 oder 2, dadurch gekennzeichnet, daß an die Mantelfläche der Hülse (12) mehrere, einen Abstand zueinander aufweisende Rippen (22) angeformt sind.

4. Scheinwerfer nach einem der Ansprüche 1 bis 3, dadurch gekennzeichnet, daß der Nocken (19) der Hülse (12) spielfrei in den die Gleitfläche (20) bildenden Abschnitt des Längsschlitzes (18) eingreift.

5. Scheinwerfer nach einem der Ansprüche 1 bis 4, dadurch gekennzeichnet, daß die Höhe des topfförmigen Griffteils (13) etwa der Länge der Hülse (12) entspricht.

6. Scheinwerfer nach einem der vorstehenden Ansprüche 1 bis, dadurch gekennzeichnet, daß an die Außenseite des topfförmigen Griffteils (13) ein Arm (23) angeformt ist, welcher in der Nähe der zwischen der Seitenwandung (16) und des Bodens (15) verlaufenden äußeren Kante angeformt ist, in Aufsetzrichtung des Griffteils (13) weist und mit seinem freien Endabschnitt in eine von zwei Verrastungsmarken (24) des Gehäuses federnd eingreift.

7. Scheinwerfer nach Anspruch 6, dadurch gekennzeichnet, daß die Verrastungsmarken (24) in einen bogenförmig verlaufenden Wandungsabschnitt (25) des Gehäuses (2) eingebracht sind, dessen konkave Seite dem bolzenförmigen Verstellelement (11) zugewandt ist und von Vertiefungen in der radial nach außen weisenden Seitenfläche des Wandungsabschnitts (25) gebildet sind, wobei die Seitenfläche zwischen den Vertiefungen (24) als Gleitfläche (26) für den federnden Arm (23) dient, welche nahezu konzentrisch zur Längsachse des bolzenartigen Verstellelementes (11) verläuft.

8. Scheinwerfer nach Anspruch 7, dadurch gekennzeichnet, daß ein Wandungsabschnitt (28), welcher dem die Gleitfläche (26) aufweisenden Wandungsabschnitt (25) gegenüberliegt, in einem Bogen verläuft, dessen Abstand zur Längsachse des bolzenartigen Verstellelements (11) zu den beiden Verrastungsmarken (24) hin stetig zunimmt und dessen Abstand an einer Stelle zur Längsachse kleiner oder gleich groß ist als der Abstand des freien Endabschnitts des federnden Arms (23) im entlasteten Zustand.

## Claims

1. A headlamp for vehicles, which can be inserted in a bodywork opening, having the following features:
- a dish-shaped reflector (1) is inserted in the interior space of the headlamp formed by a housing (2) and a transparent lens cover (3),
- a manual adjusting device (7), by means of which the reflector (1) can be adjusted about a horizontal swivelling axis (6), comprises a pin-shaped adjusting element (11) which passes through a housing opening, which adjusting element carries an integrally formed, barrel-shaped grip part (13) at its end section (14) which protrudes outwards from the housing opening and carries the reflector (1) at its end section which protrudes into the interior space of the headlamp,
- the pin-shaped adjusting element (11) is integrally formed directly on the base (15) of the barrel-shaped grip part (13) and protrudes out of the barrel-shaped grip part (13),
- the pin-shaped adjusting element (11) can be twisted between two end positions (24) in the housing opening and when twisted is axially displaceable in the housing opening due to the cooperation of a radial projection (19) and a sliding surface (20) extending at a slant,
- the pin-shaped adjusting element (11) is held axially on the bush (12) by the engagement of the radial projection (19) in the sliding surface (20),
- the sliding surface (20) is formed by a longitudinal slot (18) with long narrow side faces, whilst the projection (19) seated against the sliding surface (20) is a cam which engages in the longitudinal slot (18),
- the interior surface of the sidewall (16) of the barrel-shaped grip part (13) is of cylindrical construction,
characterised in that
- the longitudinal slot (18) is provided in the encircling sidewall (16) of the barrel-shaped grip part (13) and has an end section extending to the free edge of the barrel-shaped part (13), which end section is open at the free edge and is approximately parallel to the longitudinal axis of the pin-shaped adjusting element (11), wherein the cam (19) is integrally formed on the curved surface of the bush (12),
- the cylindrical interior surface of the sidewall (16) of the barrel-shaped grip part (13) is seated free from play against the curved surface of the bush (12),
- at least one elastically or plastically non-rigid rib (22) of the curved surface of the bush (12) is seated under prestress against the surrounding cylindrical interior surface of the barrel-shaped grip part (13),
- the rib (22) diminishes outwards and is integrally formed on the curved surface of the bush (12) between the cam (19) of the bush (12) and the free end of the bush (12).

2. A headlamp according to claim 1, characterised in that play exists between the end section (14) of the pin-shaped adjusting element (11) which passes through the bush (12) and the inside of the bush (12).

3. A headlamp according to either one of claims 1 or 2, characterised in that a plurality of spaced-apart ribs (22) is integrally formed on the curved surface of the bush (12).

4. A headlamp according to any one of claims 1 to 3, characterised in that the cam (19) of the bush (12) engages free from play in the section of the longitudinal slot (18) forming the sliding surface (20).

5. A headlamp according to any one of claims 1 to 4, characterised in that the height of the barrel-shaped grip part (13) approximately corresponds to the length of the bush (12).

6. A headlamp according to any one of the preceding claims 1 to 5, characterised in that an arm (23) is integrally formed on the outside of the barrel-shaped grip part (13), which arm is integrally formed in the vicinity of the outer edge which runs between the sidewall (16) and the base (15), points in the direction of placement of the grip part (13), and the free end section of which resiliently engages in one of two locking recesses (24) on the housing.

7. A headlamp according to claim 6, characterised in that the locking recesses (24) are provided in an arcuately extending wall section (25) of the housing (2), the concave side of which faces the pin-shaped adjusting element (11), and are formed by indentations in the radially outwardly facing side face of the wall section (25), wherein the side face between the indentations (24) serves as a sliding surface (26) for the resilient arm (23), which sliding surface extends approximately concentrically with the longitudinal axis of the pin-shaped adjusting element (11).

8. A headlamp according to claim 7, characterised in that a wall section (28), which is opposite the wall section (25) comprising the sliding surface (26), extends in an arc, the distance of which from the longitudinal axis of the pin-shaped adjusting element (11) continuously increases towards the two locking recesses (24), and the distance at one point of which from the longitudinal axis is less than or equal to the distance of the free end section of the resilient arm (23) in its stress-free state.

## Revendications

1. Phare pour véhicules, susceptible d'être monté dans une ouverture de carrosserie, présentant les caractéristiques suivantes :
- un réflecteur (1) en forme de coque est mis en place dans la cavité intérieure d'un phare formée par un boîtier (2) et une plaque d'éclairement (3),
- un dispositif de réglage (7) manuel, grâce auquel on peut régler le réflecteur (1) autour d'un axe de pivotement (6) horizontal, présente un élément de réglage (11) en forme de goujon traversant une ouverture du boîtier, ledit élément portant une poignée (13) moulée en forme de pot avec son tronçon d'extrémité (14) faisant saillie à l'extérieur hors de l'ouverture de boîtier et portant le réflecteur (1) avec le tronçon d'extrémité faisant saillie dans la cavité intérieure du phare,
- l'élément de réglage (11) en forme de goujon est moulé directement sur le fond (15) de la poignée (13) en forme de pot et fait saillie hors de la poignée (13) en forme de pot,
- l'élément de réglage (11) en forme de goujon peut être tourné dans l'ouverture du boîtier entre deux positions finales (24) et en tournant, il peut être déplacé axialement dans l'ouverture de boîtier grâce à la coopération d'une saillie (19) radiale et d'une surface de glissement (20) oblique,
- l'élément de réglage (11) en forme de goujon est maintenu axialement sur la douille (12) grâce à l'engagement de la saillie (19) radiale dans la surface de glissement (20),
- la surface de glissement (20) est formée par une fente longitudinale (18) avec des surfaces latérales étroites longues, tandis que la saillie (19) en appui sur la surface de glissement (20) est une came s'engageant dans la fente longitudinale (18),
- la face intérieure de la paroi latérale (16) de la poignée (13) en forme de pot est réalisée de forme cylindrique,
caractérisé en ce que :
- la fente longitudinale (18) est ménagée dans la paroi latérale (16) périphérique de la poignée (13) en forme de pot et présente un tronçon d'extrémité s'étendant vers le bord libre de la poignée (13) en forme de pot, ledit tronçon étant réalisé ouvert sur le bord libre et s'étendant approximativement parallèle à l'axe longitudinal de l'élément de réglage (11) en forme de goujon, la came (19) étant moulée sur la surface enveloppe de la douille (12),
- la poignée (13) en forme de pot est en contact sans jeu avec la surface intérieure cylindrique de sa paroi latérale (16) sur la surface enveloppe de la douille (12),
- la surface enveloppe de la douille (12) est en contact périphérique, sous précontrainte, sur la surface intérieure cylindrique de la poignée (13) en forme de pot avec au moins une nervure (22) élastiquement ou plastiquement souple,
- la nervure (22) se rétrécit vers l'extérieur et est moulée sur la surface enveloppe de la douille (12) entre la came (19) de la douille (12) et l'extrémité libre de la douille (12).

2. Phare selon la revendication 1, caractérisé en ce qu'il existe un jeu entre le tronçon d'extrémité (14) de l'élément de réglage (11) en forme de goujon traversant la douille (12) et la face intérieure de la douille (12).

3. Phare selon l'une ou l'autre des revendications 1 ou 2, caractérisé en ce que plusieurs nervures (2) présentant un écartement les unes par rapport aux autres sont moulées sur la surface enveloppe de la douille (12).

4. Phare selon l'une quelconque des revendications 1 à 3, caractérisé en ce que la came (19) de la douille (12) s'engage sans jeu dans le tronçon de la fente longitudinale (18) qui forme la surface de glissement (20).

5. Phare selon l'une quelconque des revendications 1 à 4, caractérisé en ce que la hauteur de la poignée (13) en forme de pot correspond approximativement à la longueur de la douille (12).

6. Phare selon l'une quelconque des revendications précédentes, caractérisé en ce que sur la face extérieure de la poignée (13) en forme de pot est moulé un bras (23) qui est formé à proximité de l'arête extérieure s'étendant entre la paroi latérale (16) et le fond (15), qui est orienté en direction de pose de la poignée (13) et qui s'engage élastiquement avec son tronçon d'extrémité libre dans une de deux marques d'encliquetage (24) du boîtier.

7. Phare selon la revendication 6, caractérisé en ce que les marques d'encliquetage (24) sont ménagées dans un tronçon de paroi (25) en forme d'arc du boîtier (2), dont la face concave est orientée vers l'élément de réglage (11) en forme de goujon et est formée par des creux dans la face latérale orientée radialement vers l'extérieur du tronçon de paroi (25), la face latérale entre les creux (24) servant de surface de glissement (26) au bras (23) élastique, ladite surface de glissement s'étendant de manière presque concentrique par rapport à l'axe longitudinal de l'élément de réglage (11) en forme de goujon.

8. Phare selon la revendication 7, caractérisé en ce qu'un tronçon de paroi (28) qui est vis-à-vis du tronçon de paroi (25) présentant la surface de glissement (26) s'étend suivant un arc dont l'écartement par rapport à l'axe longitudinal de l'élément de réglage (11) en forme de goujon augmente de façon continue vers les deux marques d'encliquetage (24), et dont l'écartement à un emplacement par rapport à l'axe longitudinal est plus petit ou égal à l'écartement du tronçon d'extrémité libre du bras élastique à l'état de décharge.
